# EUROPEAN PATENT APPLICATION

(11) **EP 1 878 613 A2**
(43) Date of publication of application: **16.01.2008**
(21) Application number: 07102349.3
(22) Date of filing: 14.02.2007
(51) Int. Cl.: B60P 1/00

(54) **Rotary-type electric flat trolley for container transportation**

(30) Priority: 13.07.2006 CN 200610028895
(71) Applicant: Shanghai Zhenhua Port Machinery Co., Ltd., 200125 Shanghai (CN)
(72) Inventor: Tian, Hong c/o Shanghai Zhenhua Port Machinery Co.,Ltd., 200125, Shanghai (CN); Wang, Xiaqi c/o Shanghai Zhenhua Port Machinery Co.,Ltd., 200125, Shanghai (CN)
(74) Representative: Ghioni, Carlo Raoul Maria

(57) **Abstract**

The present invention discloses a rotary-type electric flat trolley for container transportation comprising a base frame (4); a set of wheels (3) provided on both sides of the base frame; wheel driving means (2) provided on each set of wheels (3) for driving the set of wheels; a rotary platform (1) mounted on the base frame via rotary supporting means (5); a rotary mechanism (7) connected with the rotary supporting means; and rotary driving means (6) for driving the rotary mechanism. Thus, the container transportation from the frontside to the backside is accomplished, and the turning of the 90 degrees between the arrangement direction of the containers on a ship and that on the yard is also accomplished, which greatly increases the speed of horizontal transportation between a bank-side crane and the yard crane in a container terminal, and solves the problem of 90 degrees rotation.

## Description

### Field of Invention

The present invention relates to an equipment for container loading/unloading, and particularly to a flat trolley for container transportation.

### Background

With the exuberant demand of world-wide container transportation and the continuously increase in the throughput of the container port, new and more requirements are made to the equipment and technology for container loading/unloading. Traditional flat trolleys driven by diesels (e.g., container lorry, AGV or staddle truck) can no longer meet the requirements of the existing market, and thus it stands in need of developing and devising a high-efficiency equipment for container loading/unloading, in order to meet the requirements of the throughput of the shipping terminals imposed by the scale, speed and automation of the container transportation.

Since 1990s, with the increase in the world-wide economy and trade, the amount of container transportation is booming. Impelled by powerful transportation requirements and favourable technical economic benefits, such high and new-technology as the container crane, particularly the automatic control technology, has been fully developed. The development of the automatic control technology makes the operation of the electric trolley, running along a rail, easily be automatized, advisablely solving the problem of quick transfer between the bank-side crane and the yard crane.

Currently, automatic or semi-automatic container terminals both at home and abroad basically use container lorries, AGVs or staddle trucks for inner-yard horizontal transport, all of which use a diesel as a power source, which causes environmental pollution of the terminals. In addition, when arrangement direction of the containers on the ship is different from that on the yard and turns 90 degrees, none of the container lorries, AGVs and staddle trucks can turn around in-place, but instead requires ground roads having large turning radius, which occupy a large portion of the floorage of the yard and requires longer operating time, which cannot further improve the production efficiency and reduce the production cost.

### Summary

An object of the present invention is to provide a rotary-type electric flat trolley for container transportation, which is a high-efficient and energy-saving transportation equipment for container transfer between bank-side crane and yard crane in the container terminals.

According to the present invention, providing a rotary-type electric flat trolley for container transportation comprising a base frame; a set of wheels provided on both sides of the base frame; wheel driving means provided on each set of wheels for driving the set of wheels; a rotary platform mounted on the base frame via rotary supporting means; a rotary mechanism connected with the rotary supporting means; and rotary driving means for driving the rotary mechanism.

For the rotary-type electric flat trolley for container transportation according to the present invention, which has the above structure, when unshipping the containers, a frontside equipment in the terminal loads the containers on the rotary platform of the flat trolley, the rotary driving means drives the rotary mechanism to turn 90 degrees, and then the trolley moves along the rails to the yard at the backside in the terminal. Thus, the container transportation from the frontside to the backside is accomplished, and the turning of the 90 degrees between the arrangement direction of the containers on the ship and that on the yard is also accomplished. The shipping process is on the contrary.

The most prominent advantages of the rotary-type electric flat trolley for container transportation according to the present invention are: not only solving the problem of high-efficiency container transportation between the frontside and the backside in the terminal, but also solving the problem of the 90 degrees difference between the arrangement direction of the containers on the ship and that on the yard. Further, the flat trolley is driven by electric power instead of diesel, achieving the objects of energy-saving and environmental-protection.

The rotary-type electric flat trolley for container transportation according to the present invention is of a new equipment and technology of horizontal transportation used in container terminals. It is driven by electric power, and thus it has the benefit of energy-saving and environmental-protection, achieving semi-automation and full-automation of the horizontal transportation in the container terminals. Also, the difficulty and cost of the construction of the automatic container terminal is greatly reduced. Thus, it has long term potential and unlimited market.

### Brief Description of the Drawings

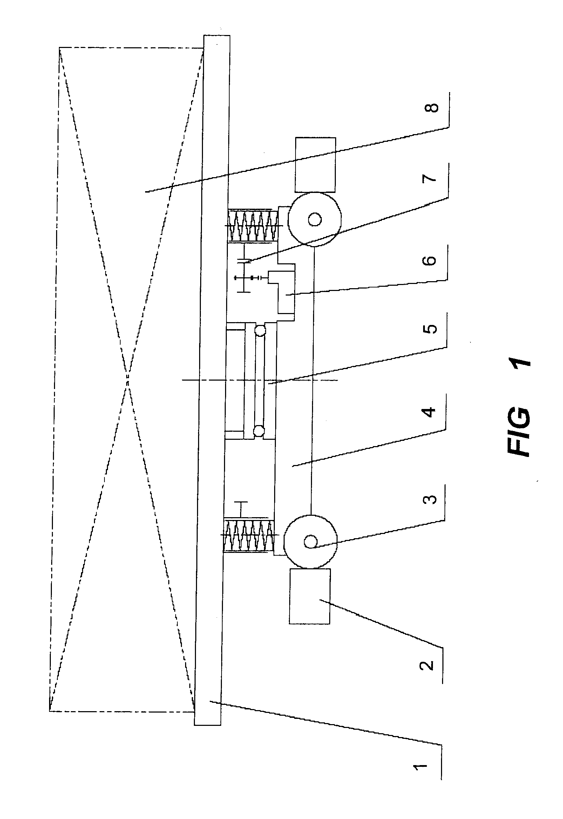

Figure 1 is a structural diagram of the rotary-type electric flat trolley for container transportation according to the present invention.

### Detailed Description of Preferred Embodiments

As shown in Figure 1, the rotary-type electric flat trolley for container transportation according to the present invention may run on a rail, and has the following structures: a base frame 4; a set of wheels 3 provided on both sides of the base frame 4; wheel driving means 2 is provided on the set of wheels 3 for driving the set of wheels 3; a rotary platform 1 is mounted on the base frame 4 via rotary supporting means 5; rotary driving means 6 is provided for driving a rotary mechanism 7; the rotary mechanism 7 is connected with the rotary supporting means 5 and drives the rotary supporting means 5. Thus, the rotary platform 1 may be rotary on the base frame 4.

Containers 8 can be placed on the rotary platform 1, which can accommodate a single row of 20 feet containers, double 20 feet containers, 40 feet containers, and 45 feet containers, and can accommodate two parallel rows of 20 feet containers, double 20 feet containers, 40 feet containers, and 45 feet containers. The rotary platform 1 is mounted on the base frame 4 via rotary supporting means 5, and the rotary driving means 6 can drive the rotary platform to rotate on the base frame 4. The rotary platform 1 can rotate with the containers 8 or without the containers 8.

The rotary-type electric flat trolley for container transportation according to the present invention can be applied for horizontal transportation between frontside and the backside in the container terminal. The horizontal transportation is performed by the flat trolley moving along the rail. The flat trolley can perform horizontal movement back and forth along the rail to transport containers from one place to another place, and the rotary platform 1 on the flat trolley can rotate clockwise or anticlockwise with the containers or without the containers, to turn 90 degrees between the arrangement direction of the containers on the ship and that on the yard. The concrete loading/unloading process is as follows:
1) the rotary-type electric flat trolley for container transportation according to the present invention is deployed between the loading/unloading site of the frontside loading/unloading equipment and the loading/unloading site of the yard loading/unloading equipment in the container terminal, and the container transportation between these two loading/unloading sites is performed by back and forth movement of the flat trolley;
2) the rotary platform 1 is mounted on the base frame 4 via rotary supporting means 5, and the rotary driving means 6 can drive the rotary platform to rotate clockwise or anticlockwise with the containers or without the containers, to turn 90 degrees between the container arrangement directions of two loading/unloading sites; and
3) when unshipping the containers, the frontside equipment in the terminal loads the containers on the rotary platform 1 of the flat trolley, the rotary platform 1 turns 90 degrees, and then the trolley moves along the rail to the yard at the backside in the terminal. Thus, the container transportation from the frontside to the backside is accomplished, and the turning of the 90 degrees between the arrangement direction of the containers on the ship and that on the yard is also accomplished. The shipping process is on the contrary.

Summing up, the rotary-type electric flat trolley for container transportation according to the present invention not only solves the problem of high-efficiency container transportation between the frontside and the backside in the terminal, but also solving the problem of the 90 degrees difference between the arrangement direction of the containers on the ship and that on the yard. Further, the flat trolley is driven by electric power instead of diesel, achieving the objects of energy-saving and environmental-protection. In addition, it greatly increases the speed of horizontal transportation between the bank-side crane and the yard crane in the container terminal, and solves the problem of 90 degrees rotation. Such a special loading/unloading process is applied for not only un-automatic terminals but also particularly for automatic terminals. Such an advantage in loading/uploading process initiates a brand new operation mode for fully improving the benefits and level of technology of the container loading/uploading terminals.

The previous description of the disclosed embodiments is provided to enable any person skilled in the art to make or use the present invention. Various modifications to these embodiments will be readily apparent to those skilled in the art, and the generic principles defined herein may be applied to other embodiments without departing from the spirit or scope of the invention. Thus, the present invention is not intended to be limited to the embodiments shown herein but is to be accorded the widest scope consistent with the principles and novel features disclosed herein.

## Claims

1. A rotary-type electric flat trolley for container transportation comprising:
a base frame;
a set of wheels provided on both sides of the base frame;
wheel driving means provided on each set of wheels for driving the set of wheels;
a rotary platform mounted on the base frame via rotary supporting means;
a rotary mechanism connected with the rotary supporting means; and
rotary driving means for driving the rotary mechanism.
